Europäisches Patentamt

**European Patent Office**

**Office européen des brevets**

(11) Numéro de publication: **0 322 589 B1**

# FASCICULE DE BREVET EUROPEEN

(45) Date de publication de fascicule du brevet: **20.01.93**  (51) Int. Cl.⁵: **A23J 3/00**, A23L 1/305

(21) Numéro de dépôt: **88120032.3**

(22) Date de dépôt: **01.12.88**

(54) **Procédé de préparation d'un hydrolysat de protéines de lactosérum et d'un aliment hypoallergéniques.**

(30) Priorité: **23.12.87 EP 87119104**

(43) Date de publication de la demande:
**05.07.89 Bulletin 89/27**

(45) Mention de la délivrance du brevet:
**20.01.93 Bulletin 93/03**

(84) Etats contractants désignés:
**AT BE CH DE ES FR GB IT LI LU NL SE**

(56) Documents cités:
**EP-A- 321 603**
**EP-A- 0 055 172**
**EP-A- 0 087 247**

(73) Titulaire: **SOCIETE DES PRODUITS NESTLE S.A.**
**Case postale 353**
**CH-1800 Vevey(CH)**

(72) Inventeur: **Jost, Rolf**
**Ch. de Béranges 265**
**CH-1814 La Tour-de-Peilz(CH)**
Inventeur: **Meister, Niklaus**
**Moeschbergweg 20**
**CH-3506 Grosshoechstetten(CH)**
Inventeur: **Monti, Julio Cesar**
**Sous les Terreaux 1**
**CH-1804 Corsier(CH)**

Rank Xerox (UK) Business Services

**Description**

La présente invention a pour objet la préparation de produits alimentaires à allergénicité réduite.

On sait que les phénomènes d'allergies au lait de vache et aux laits adaptés aux besoins du petit enfant qui en contiennent sont dus au fait que les protéines du lait de vache d'origine lactosérique diffèrent des protéines du lait maternel et peuvent constituer des allergènes. Parmi celles-ci, les principaux allergènes reconnus sont en majorité l'alphalactalbumine (aLA) et la bétalactoglobuline (bLG), et en minorité les immunoglobulines (en particulier IgG) et la sérumalbumine (BSA).

On a cherché à éliminer leur allergénicité en les transformant en peptides par hydrolyse.

Selon le brevet des Etats-Unis No 4.293.571, on prépare un hydrolysat de protéines par hydrolyse pancréatique, on coagule les protéines non hydrolysées par un traitement thermique, puis on soumet l'hydrolysat à une ultra-filtration de manière à éliminer les protéines résiduelles coagulées et les macropeptides qui pourraient constituer des allergènes.

On a également proposé, par exemple selon Blatt et coll., Anal. Biochem. 22 : 161-165 ou la demande de brevet européen No 22.019, d'effectuer l'hydrolyse des protéines lactosériques directement dans une installation d'ultra-filtration et de recueillir les peptides au fur et à mesure de leur formation. Dans un tel réacteur à membrane, les protéines non hydrolysées restent dans le rétentat qui est recyclé vers le compartiment d'hydrolyse pour être à nouveau hydrolysé. Il apparaît que, même dans ces conditions, il n'est en pratique pas possible d'hydrolyser complètement toutes les protéines du lactosérum. La sérumalbumine par exemple s'accumule dans le réacteur d'hydrolyse. Les différentes espèces d'immunoglobulines résistent également a l'hydrolyse par les enzymes pancréatiques et ne se scindent que partiellement. Les gros fragments ou macropeptides obtenus par hydrolyse de l'immunoglobuline de colostrum bovin (IgG) par la trypsine ou la papaïne maintiennent l'essentiel de l'allergénicité de l'IgG.

En résumé, il est admis qu'il n'est pas suffisant de dégrader l'aLA et la bLG, car le BSA et l'IgG constituent des allergènes pour l'homme et ont été décrits comme tels. Avec les méthodes de séparation physique connues, les protéines mineures de haute valeur nutritionnelle sont perdues.

EP-A-87247 concerne un procédé de préparation d'un hydrolysat protéique de qualité organoleptique acceptable, sans peptide amer, pour l'alimentation hospitalière par l'utilisation d'un système enzymatique combiné a base d'un mélange de protéase fongique et de pancréatine conduisant a une hydrolyse rapide d'albumine d'oeuf ou de protéine de soja. Lorsque l'hydrolyse a lieu en deux étapes, un traitement thermique intermédiaire est prévu dont le but est l'inactivation de la première enzyme de manière qu'elle ne digère pas la seconde enzyme. A la fin du traitement, il reste des quantités appréciables de protéines non hydrolysées susceptibles d'être allergènes.

L'invention a pour but de proposer un procédé de préparation d'un hydrolysat de protéines de lait animal pratiquement exempt d'allergènes d'origine protéique, dans lequel on hydrolyse enzymatiquement un produit lactosérique.

L'invention concerne donc un procédé de préparation d'un hydrolysat de protéines de lait animal, dans lequel on hydrolyse enzymatiquement un produit lactosérique en deux étapes d'hydrolyse distinctes et on inactive l'enzyme thermiquement.

Il est caractérisé par le fait que les deux étapes d'hydrolyse sont réalisées avec une enzyme protéolytique choisie parmi la trypsine, la chymotrypsine, un mélange de trypsine et de chymotrypsine et la pancréatine et que l'on traite thermiquement l'hydrolysat de la première hydrolyse en solution aqueuse à 80-100°C pendant 3 à 10 min. à un pH de 6 à 8, de manière à dénaturer les protéines restées intactes après la première hydrolyse et à les rendre ainsi susceptibles à la seconde hydrolyse, de sorte qu'après la seconde hydrolyse, l'hydrolysat soit pratiquement exempt d'allergènes tels que protéines, fragments de protéine ou macropeptides de poids moléculaire supérieur à environ 10'000.

Un avantage déterminant du procédé selon l'invention est qu'il n'est pas nécessaire de recourir à l'élimination de protéines résiduelles de haute valeur nutritionnelle par séparation physique.

L'hydrolysat obtenu est particulièrement destiné à l'alimentation des petits enfants à risques d'allergie ou à allergie acquise.

Dans le présent exposé, le terme "allergène" est à comprendre comme "protéine ou macropeptide susceptible de déclencher des réactions allergiques chez des sujets, notamment des petits enfants ou des nourrissons sensibles". On considère qu'un hydrolysat ou un aliment contenant un tel hydrolysat est hypoallergénique lorsqu'on ne peut plus déceler la présence de protéines ou de gros fragments ou macropeptides de poids moléculaire > à environ 10.000 par les méthodes analytiques habituelles, par exemple par chromatographie liquide haute performance (HPLC), par electrophorèse de zone en gel de polyacrylamide (SDS-PAGE) ou, lorsque ces méthodes ne permettent plus de mettre en évidence des antigènes protéiques ou macropeptidiques, par des méthodes immunologiques, par exemple par double immunodiffusion (ID).

Pour mettre en oeuvre le présent procédé, on peut partir de tout hydrolysat enzymatique d'une matière première lactosérique contenant les protéines du lactosérum. Cette matière première peut être un lactosérum de fromagerie, notamment un lactosérum doux tel que celui résultant d'une coagulation de la caséine par la présure, un lactosérum acide provenant de la coagulation de la caséine par un acide ou les ferments acidifiants ou encore un lactosérum mixte résultant d'une coagulation acide et présure.

Cette matière première peut être un lactosérum déminéralisé par échange d'ions et/ou par electrodialyse. Ce peut être un concentré de protéines de lactosérum plus ou moins délactosées, obtenu par exemple par ultrafiltration suivie le cas échéant d'une dialyse. La matière première peut être encore une combinaison des matières premières précédentes et de lactose. Elle peut se présenter sous forme de solution aqueuse, vraie ou colloïdale, ou de poudre. Dans ce dernier cas, on dissout la poudre dans de l'eau, de préférence déminéralisée, de manière à former une solution aqueuse. La matière première subit une hydrolyse enzymatique, par des enzymes protéolytiques en mélange ou purifiées, actives dans les domaines basique et neutre, par exemple la trypsine, la chymotrypsine ou la pancréatine de manière connue.

On peut pratiquer l'hydrolyse préalable pendant un temps relativement court, de préférence 5 à 35 min., par exemple 10 min. avec une faible quantité d'enzyme, par exemple 10% de la quantité totale mise en oeuvre pour les hydrolyses, ceci permet d'économiser l'enzyme. L'hydrolyse est alors partielle. Cette hydrolyse peut avoir lieu dans un réacteur ou en variante dans un tube.

Dans le cas où le substrat destiné à être hydrolysé aurait tendance à coaguler lors du traitement thermique, on peut prévoir d'y ajouter un agent chélateur comme par exemple le citrate de calcium ou de magnésium, comme c'est indiqué par exemple dans le brevet des Etats-Unis No 4.748.034.

Selon l'invention, l'hydrolysat subit un traitement thermique, à 80-100°C pendant 3 à 10 min. à un pH de 6 à 8. Bien entendu, durée et température sont liées, la limite inférieure de la température correspondant à la limite supérieure de la durée et inversement. Dans les échangeurs de chaleurs industriels, une température d'environ 90°C et une durée d'attente d'environ 5 min. se sont avérées suffisantes pour réaliser la dénaturation des protéines mineures. Il est apparu en effet qu'une telle dénaturation rend ces protéines accessibles à la dégradation enzymatique ultérieure. Il convient de mentionner que le traitement thermique inactive l'enzyme.

On refroidit ensuite l'hydrolysat à 40-60°C, de préférence à environ 55°C qui constitue la température optimale pour l'activité hydrolytique et on ajuste le pH de préférence à environ 7,5 par addition d'une solution aqueuse d'une base.

Les conditions de la seconde hydrolyse peuvent varier. Dans un premier mode de réalisation, on la conduit de manière discontinue, par charges dans une cuve de réaction thermostatée. Après avoir ajouté l'enzyme protéolytique choisie parmi la trypsine, la chymotrypsine, la pancréatine, un mélange de trypsine et de chymotrypsine en solution aqueuse, on conduit l'hydrolyse pendant 60 à 180 min.

Dans un second mode de réalisation, qui est préféré, la seconde hydrolyse a lieu en continu dans un tube qui constitue le réacteur en régime turbulent, pendant 1 à 60 min., de préférence pendant 2 à 20 min. Dans cette variante, suivant sa longueur, le tube fournit le temps de réaction requis compte tenu du débit de produit à hydrolyser. En conséquence, l'enzyme doit être pompée en continu à l'entrée du tube d'attente. Le régime de forte turbulence qui en résulte provoque un contact rapide et intense entre l'enzyme et le substrat.

Quel que soit le mode de réalisation de la seconde hydrolyse, le produit de l'hydrolyse subit un traitement thermique qui provoque l'inactivation de l'enzyme. Celui-ci consiste à préchauffer l'hydrolysat à une température supérieure ou égale à 75°C et à le maintenir à cette température de préférence à 75-85°C pendant environ 5 min., de manière à favoriser une auto-digestion de l'enzyme et ce traitement est avantageusement suivi d'une stérilisation, de préférence à ultra haute température, par exemple à 125-135°C pendant 2-3 min., par injection de vapeur ou dans un échangeur de chaleur.

L'hydrolysat peut être ensuite séché par exemple par pulvérisation ou par lyophilisation en vue d'une utilisation différée ou encore traité ultérieurement. Dans ce dernier cas, l'inactivation de l'enzyme peut être effectuée lors du traitement ultérieur.

L'hydrolysat préparé par le procédé selon l'invention peut être incorporé dans de nombreuses préparations alimentaires à usage diététique, notamment en diététique infantile ou des convalescents, ou dans des aliments facilement résorbables à l'usage de personnes souffrant d'allergies.

L'invention concerne également un procédé de préparation d'un aliment hypoallergénique, caractérisé par le fait que l'on ajoute à l'hydrolysat des hydrates de carbones, des sels minéraux et des matières grasses à l'état liquide contenant le cas échéant des vitamines liposolubles, on y ajoute le cas échéant une solution aqueuse contenant des vitamines hydrosolubles et des oligo-éléments, puis on sèche.

On peut sécher par lyophilisation, ou de préférence par pulvérisation.

En variante, on peut inactiver l'enzyme par stérilisation à ultra haute température, puis on conditionne le produit à l'état liquide au lieu de le sécher.

Les exemples suivants illustrent l'invention. Dans ceux-ci, les parties et pourcentages sont, sauf indication contraire, exprimés en valeur pondérale.

Dans ces exemples, les analyses par les méthodes ci-après sont destinées à montrer l'absence de protéines ou de macropeptides résiduels après la seconde hydrolyse :

I/SDS-PAGES, selon Laemmli, U.K. 1970, Nature 227:680 et suivantes, dans les conditions spécifiques indiquées ci-après:

| Paramètre | Gel de concentration | Gel de séparation |
|---|---|---|
| Acrylamide total (%), | 5,4 | 13,3 |
| Agent réticulant (%), | 2,6 | 2,6 |
| Dodécylsulfate de sodium (SDS,%), | 0,1 | 0,1 |
| complété à 100% par addition d'eau distillée | | |
| pH | 6,8 | 8,8 |
| Dimensions des couches de gel sur les plaques (mm) | 102 X 73 X 0,5 | |
| Echantillon ($\mu$g, calculé en azote total, Nt) | 5 - 15 | |
| Intensité du courant (mA/plaque) | 15 | |

Révélateur: coomassie brillant bleu G-250

Solution tampon de l'électrophorèse : 0,025 M Tris, 0,19 M glycine, 0,1% SDS

Préparation des échantillons: on disperse les échantillons dans une solution tampon aqueuse contenant 1% de SDS et de dithiothréitol comme agent réducteur. On chauffe rapidement jusqu'à 100°C. On procède ensuite à l'alkylation par l'iodoacétamide en solution aqueuse 2M de tampon Tris de pH 8 (18 mg dans 0,1 ml de solution tampon). Dans certains cas, on omet volontairement la réduction et l'alkylation de manière à montrer les protéines à l'état non-réduites.

Sensibilité: la méthode détecte environ 0,1 $\mu$g de protéines BSA, aLA et bLG. La limite de détection des chaînes H et L des IgG et des IgG intactes (non-réduites) est plus élevée à cause du caractère diffus des bandes.

II/ID, selon Outcherlony, o, Acta. Pathol. Microbiol. Scand. 26 : 507, dans les conditions expérimentales spécifiques ci-après:

| Paramètre | Conditions |
|---|---|
| Solution aqueuse d'agar | 1,5% (poids/volume), agar de type I de Calbiochem, en solution saline de tampon phosphate, pH 7,2 |
| Gels d'agar | sur film fixant (produit LKB No 1850-102) |
| Diamètre des orifices (mm) | 3 |
| Coloration des gels lavés | coomassie brillant bleu R-250 dans une solution éthanol/eau/ acide acétique (45/45/10, % volume/volume) |
| Décoloration | "          "          " |

4

Méthode: L'échantillon non-dilué est constitué d'une solution physiologique saline de 100 mg/ml. On procède à des dilutions successives de 2:1 et on remplit les orifices successifs, d'une part avec l'échantillon, d'autre part avec les sera spécifiques de lapin, respectivement anti-bLG, anti-aLA, anti-BSA et anti-IgG, à une concentration du 1/16ème de la concentration initiale de l'échantillon. La détection de la protéine correspond à la réaction de précipitation antigène-anticorps. On note le premier titre (exprimé en fraction de la concentration initiale) correspondant à une absence de réaction.

Sensibilité de la méthode: la limite de concentration de détection de aLA et bLG est voisine de 20 $\mu$g/ml (volume de l'échantillon 10 $\mu$l), celle de BSA et IgG est voisine de 40 $\mu$g/ml.

III/HPLC: selon Diosady, L.L. et coll. 1980, Milchwissenschaft 35 : 671. et Bican, P. et coll., 1982, Milchwissenschaft 37 : 592.

L'analyse sur colonne TSK 3000-SW confirme l'absence de pic pour le BSA et l'IgG après la seconde hydrolyse par comparaison avec les protéines intactes dans les conditions ci-après:

| | |
|---|---|
| Solvant: | solution tampon, 0,05 M Tris-HCl, 4 M guanidinium, pH 6,8 |
| Echantillon: | 1 mg d'hydrolysat ou de protéine (témoin) |
| Détection: | 280 nm, débit 1 ml/min |

Température de la colonne: 20°C
Condition de gradient isocratique.

Exemple 1

On disperse 24 g de poudre de lactosérum acide déminéralisé (DWP) dans de l'eau déminéralisée sous agitation et on chauffe lentement jusqu'à la dissolution. La solution obtenue a un volume de 80 ml et une teneur en matières sèches de 30%.

La poudre de lactosérum déminéralisé mise en oeuvre a la composition suivante.

| | % |
|---|---|
| Protéines (N x 6,38) | 11,9 |
| Matières grasses | 0,8 |
| Lactose | 81 |
| Cendres | 2,8 |
| Humidité | 3,5 |

On met la solution dans un réacteur à double paroi thermostaté à 55°C. On augmente le pH de la solution à 8 par addition d'une dispersion aqueuse de Ca(OH)$_2$ à 20% (poids/volume).

On ajoute alors 30 mg de trypsine porcine de force 1500 unités/mg (pharmacopée des Etats-Unis, USP). On observe une diminution rapide du pH (due à l'initiation de l'hydrolyse) que l'on stoppe à pH 7,5 en utilisant une solution aqueuse de KOH 1N et on maintient le pH à cette valeur avec un pH-stat par compensation automatique à l'aide d'une solution aqueuse de KOH 1N. La réaction se poursuit pendant 4 h à 55°C, après quoi on n'observe plus de réaction décelable par titration.

On sépare l'hydrolysat en quatre portions égales:

1a: On ajoute à 20 ml d'hydrolysat une solution aqueuse contenant 6 mg d'inhibiteur de trypsine de soja (STI) de manière à bloquer l'action de la trypsine, puis on sèche la solution par lyophilisation.

1b: On chauffe 20 ml d'hydrolysat à 70°C en 1 min. et on maintient cette température pendant 5 min.

1c: On chauffe 20 ml d'hydrolysat à 80°C en 2,5 min. et on maintient cette température pendant 5 min.

1d: On chauffe le reste de l'hydrolysat en 4 min. à 90°C et on maintient cette température pendant 5 min.

On refroidit rapidement les hydrolysats 1b, 1c et 1d à 55°C, puis on les introduit séparément dans des réacteurs. Dans chaque réacteur, on ajoute 30 mg de la trypsine précédente, puis on laisse la réaction se poursuive pendant 1 h. à 55°C à pH 7,5, après quoi on n'observe plus de réaction décelable par titration. On ajoute alors 6 mg de STI à chacun des hydrolysats et on les sèche séparément par lyophilisation. Les hydrolysats obtenus sont dénommés respectivement 1e, 1f et 1g.

Les résultats d'analyse par électrophorèse (SDS-PAGE) et double immunodiffusion (ID) relatifs aux titres de sérumalbumine bovine (BSA) et d'immunoglobuline G (IgG) sont indiqués au tableau 1 ci-après:

## Tableau 1

| Echantillons | BSA par SDS-PAGE | BSA par ID | IgG par ID |
|---|---|---|---|
| 1a | +++ | 1/32 | 1/64 |
| 1b | +++ | 1/32 | 1/16 |
| 1c | +++ | 1/8 | 1/1 |
| 1d | +++ | 1/8 | 0 |
| 1e | +++ | 1/32 | 1/32 |
| 1f | + | 1/8 | 1/1 |
| 1g | 0 | 0 | 0 |

Légende: +++: $\geqslant 1\ \mu$g dans 10 $\mu$g Nt

+: $\geqslant 0,1\ \mu$g dans 10 $\mu$g Nt

0: non détectable, $< 0,1 \mu$g dans 10 $\mu$g Nt

Résultats:

Alors que les titres par ID sont:

| | |
|---|---|
| aLA: | 1/256 - 1/512 |
| bLG: | 1/512 - 1/1024 |
| BSA: | 1/8 - 1/32 et |
| IgG: | 1/8 - 1/64 |

pour une solution aqueuse de 100 mg/ml de poudre de lactosérum déminéralisé mis en oeuvre, le SDS-PAGE et 1'ID ne permettent de détecter la présence d'alphalactalbumine (aLa) et de bétalactoglobuline (bLG) dans aucun des échantillons.

L'hydrolyse n'est pas suffisante pour faire disparaître les allergènes constitués par les protéines BSA et IgG (1a).

Même si l'hydrolysat est traité thermiquement, cela ne suffit pas à éliminer le BSA (1b, 1c, 1d).

Pour obtenir un hydrolysat à allergénicité réduite, il faut un traitement thermique approprié, suivi d'une seconde hydrolyse (1f, 1g).

Exemple 2

On disperse 150 g de concentrat de protéines de lactosérum obtenues par ultrafiltration de petit-lait doux (WPC) dans 1 l d'eau déminéralisée à 50°C dans un réacteur à double paroi thermostaté à 50°C.

Le concentrat de protéines de lactosérum mis en oeuvre a la composition suivante:

|  | % |
|---|---|
| Protéines (N x 6,38) | 77,2 |
| Matières grasses | 8 |
| Lactose | 3 |
| Cendres | 7,3 |
| Humidité | 4,5 |

On augmente le pH initial de 6,6 jusqu'à 7,9 par addition d'une dispersion aqueuse de $Ca(OH)_2$ à 20% (poids/volume). On règle le pH-stat de manière à maintenir le pH à 7,3 par compensation automatique avec une solution aqueuse de KOH 2N.

On ajoute 7,5 g de trypsine pancréatique de force 3 unités Anson (AU)/g de manière à initier l'hydrolyse et on poursuit la réaction pendant 4 h à 50°C. On chauffe ensuite l'hydrolysat à 90°C par injection de vapeur et on le maintient pendant 5 min. à cette température. Après refroidissement à 55°C on rétablit le pH à 7,3 par compensation automatique avec une solution aqueuse de KOH 2N. On introduit alors 2 g de trypsine porcine (force 6 AU/g) de manière à initier la seconde hydrolyse que l'on poursuit pendant 2 h avec compensation automatique du pH. On traite ensuite thermiquement l'hydrolysat pendant 10 min. à 90°C, puis on le refroidit rapidement et on le sèche par lyophilisation.

Pour suivre l'hydrolyse, on prélève des échantillons de 1 ml à différents stades de l'hydrolyse, on y ajoute chaque fois 6 mg de STI, on les congèle rapidement et on les sèche par lyophilisation.

Les résultats d'analyse par ID sont indiqués dans le tableau 2 ci-après.

## Tableau 2

| Echantillon | Stade d'hydrolyse /durée (min) | Traitement thermique après le 1er stade température (°C)/durée (min) | Traitement thermique après le 2ème stade température (°C)/durée (min) |
|---|---|---|---|
| 2a | 1er/25 | - | - |
| 2b | 1er/70 | - | - |
| 2c | 1er/180 | - | - |
| 2d | 1er/240 | - | - |
| 2e | 1er/240 | 90/5 | - |
| 2f | 1er/240+ 2ème/60 | 90/5 | - |
| 2g | 1er/240+ 2ème/60 | 90/5 | 90/10 |

<u>Suite du tableau 2</u>

Echantillon                                    Titre ID$^1$ pour

| Echantillon | aLA | BLG | BSA | IgG |
|---|---|---|---|---|
| 2a | 1/16 | 1/8 | 1/32 | 1/64 |
| 2b | 1/2 | 1/2 | 1/32 | 1/32 |
| 2c | 1/1 | 1/1 | 1/32 | 1/32 |
| 2d | 1/1 | 1/1 | 1/32 | 1/32 |
| 2e | 1/1 | 1/1 | 1/4 | 1/1 |
| 2f | 0 | 0 | 0 | 0 |
| 2g | 0 | 0 | 0 | 0 |
| Contrôle = WPC de départ | 1/1048 | 1/1048 | 1/64 | 1/128 |

<u>Légende</u>:

-   Absence de traitement thermique
1: Concentration initiale avant dilution,
    25 mg/ de matières sèches/ml

Résultats:

Il ressort du tableau 2 précédent que seule la double hydrolyse avec traitement thermique intermédiaire permet d'éliminer l'antigénicité de l'hydrolysat.

L'analyse par SDS-PAGE montre par ailleurs qu'aucune bande correspondant au BSA ne peut être détectée pour les échantillons 2f et 2g.

Exemple 3

On disperse 254,6 kg de DWP, 91,3 kg de WPC et 101,4 kg de lactose de qualité alimentaire dans 800 kg d'eau déminéralisée à 60°C.

Le lactose mis en oeuvre a la composition suivante:

| | % |
|---|---|
| Protéines (N x 6,38) | 0,5 |
| Matières grasses | - |
| Lactose | 94,5 |
| Cendres | 0,1 |
| Humidité | 4,9 |

On met la dispersion précédente dans un réacteur à double paroi thermostaté à 55°C. La dispersion a une teneur en matières sèches de 30,1% et un pH de 6,4. On augmente le pH par addition d'une dispersion aqueuse de $Ca(OH)_2$ à 20% jusqu'à 7,8. On ajoute alors 1 kg de trypsine porcine (force 6 AU/g, rapport d'activité trypsine:chymotrypsine 15:1 - 20:1 en USP) dispersée dans une solution aqueuse 0,01 M d'HCl à 5-10°C, de manière à initier l'hydrolyse. On stoppe ensuite la chute rapide initiale du pH et on le maintient à 7,3 avec un pH-stat par compensation automatique à l'aide d'une solution aqueuse de KOH 2N.

On poursuit l'hydrolyse à 55°C et à pH 7,3 pendant 3 h, après quoi on augmente le pH à 7,6 par réglage du pH-stat à la nouvelle valeur. On fait ensuite passer l'hydrolysat à travers un échangeur de chaleur à plaques de manière à le chauffer rapidement à 90°C, de là dans un tube d'attente (débit 7,5 l/min., volume du tube 40 l, temps d'attente 5 min), puis dans un second échangeur de chaleur à plaques où il est refroidi à 55°C.

On pompe alors l'hydrolysat à un débit de 7,5 l/min. par l'intermédiaire d'une vanne en T dans un tube d'attente de diamètre 0,025 m et de volume 150 l, ce qui correspond à un temps d'attente de 20 min. pour toute la longueur. On pompe également 1 kg de trypsine (même dispersion que précédemment) dans le courant d'hydrolysat à un débit de 6 l/h par l'intermédiaire de la vanne en T à l'entrée du tube d'attente. Le tube d'attente est divisé en sections qui permettent des durées d'attente progressives de 40 s. à 20 min. On prélève un échantillon d'hydrolysat de quelques ml au début du tube (sans temps d'attente), puis pour chaque temps d'attente, on les traite immédiatement avec la quantité appropriée de STI et on les congèle. Après préchauffage à 80°C avec un temps d'attente de 5 min., on pompe le reste de l'hydrolysat (qui a subi un temps d'attente de 20 min.) dans un stérilisateur à ultra haute température ou il est porté à 125°C pendant 2 min. de manière à inactiver l'enzyme et à stériliser l'hydrolysat. Après l'avoir refroidi, on sèche l'hydrolysat par pulvérisation.

La poudre obtenue a la composition suivante:

|  | % |
|---|---|
| Peptides | 23 |
| Lactose | 68 |
| Cendres | 4 |
| Matières grasses | 2 |
| Humidité | 3 |

Le degré d'hydrolyse, azote x 100 / azote total (Nt) est 18% et le Nt 3,56%.

L'analyse par SDS-PAGE confirme l'absence de bandes protéiques avec des charges de produit de 139 $\mu$g (5 $\mu$g Nt) et de 500 $\mu$g (18 $\mu$g Nt). En particulier, on n'observe aucune bande correspondant au BSA, aux chaînes H et L des IgG au aLA ou au bLG. On voit une bande colorée diffuse due aux gros peptides près de l'extrémité anodique du gel.

Par ID, on ne voit aucune ligne de précipitation avec des sera anti-BSA, anti-IgG, anti-bLG est anti-aLA à partir d'un échantillon de 100 mg de matières sèches / ml avant dilution.

Le tableau 3 ci-après montre l'influence du temps d'attente lors de la seconde hydrolyse, sur le BSA en particulier.

## Tableau 3

### Titres ID[1]

| Echantillon | Durée du temps d'attente (s.) | BSA | IgG | bLG | BSA par SDS-PAGE (Charge 500 $\mu$g) |
|---|---|---|---|---|---|
| 3 a (contrôle sans 2ème hydrolyse) | | 1/8 | 1/2 | 1/4 | +++ |
| 3b | 40 | 1/4 | 1/1 | 0 | + |
| 3c | 120 | 1/1 | 0 | 0 | 0 |
| 3d | 360 | 1/1 ou 0 | 0 | 0 | 0 |
| 3e | 720 | 1/1 ou 0 | 0 | 0 | 0 |
| 3f | 1080 | 1/1 ou 0 | 0 | 0 | 0 |
| 3g (avec traitement thermique final 125°C/2min.) | 1080 | 0 | 0 | 0 | 0 |

**Légende:**

1:   La concentration initiale avant dilution est 100 mg de matières sèches /ml

Résultats:

SDS-PAGE: On observe une diminution rapide de l'intensité de la bande BSA après 40 s. déjà. Après 2 min., la bande n'est plus détectable pratiquement. Par comparaison avec des dilutions successives de BSA pure, la limite de sensibilité de la méthode est atteinte pour des charges de 50 ng (nanogramme). On peut affirmer que la concentration finale de BSA dans l'hydrolysat après 20 min. d'attente est < 0,01%, en matières sèches, par rapport à une concentration initiale estimée à 1,8-2,2%.

ID: Un titre 0 ou 1 est atteint après 6 min. d'attente. On voit que l'hydrolyse des protéines restées intactes après la première hydrolyse a lieu relativement rapidement.

Exemple 4

On procède comme à l'exemple 3, sauf que la quantité d'enzyme ajoutée lors de la seconde hydrolyse est la moitié, (ce qui représente 75% de la quantité totale d'enzyme employée à l'exemple 3, 1ère et 2ème hydrolyse). L'analyse de BSA par ID montre un titre de 0 à 1 après 10 min. d'attente. Par conséquent, la quantité d'enzyme mise en oeuvre peut être diminuée si le temps d'attente lors de la seconde hydrolyse augmente.

Exemple 5

On procède comme à l'exemple 3, sauf que la durée de la première hydrolyse est 2 h et que la seconde hydrolyse a lieu dans un réacteur pendant 2 h à pH constant, 7,3. Les analyses de BSA par SDS-PAGE et ID montrent la disparition de la protéine dans l'hydrolysat.

Exemple 6

On met en oeuvre la même matière que dans l'exemple 3 en même quantité en ce qui concerne le DWP, le WCP et l'eau et on met la dispersion dans un réacteur à double paroi thermostaté à 55°C, puis on y ajoute 200 g de trypsine. On conduit l'hydrolyse pendant 10 min. en compensant la chute de pH par addition de KOH 2N.

On fait ensuite passer l'hydrolysat dans un échangeur de chaleur à plaques qui le chauffe à 90°C pendant 5 min. puis on le refroidit à 55°C.

On met ensuite le produit partiellement hydrolysé et traité thermiquement dans le réacteur thermostaté à 55°C et on ajoute 1,8 kg de trypsine dispersée dans une solution aqueuse d'HCl 0,01 M. On compense la chute du pH par addition de KOH 2N.

Après 3 h d'hydrolyse, on procède à l'inactivation et à l'autodigestion de l'enzyme en chauffant l'hydrolysat à 80°C pendant 5 min. On le stérilise ensuite à 125°C pendant 2 min.

Exemple 7

On procède comme à l'exemple 6, sauf que l'on réalise la première hydrolyse dans un tube d'attente pendant 10 min. Le traitement thermique a ensuite lieu dans l'échangeur de chaleur à 90°C pendant 5 min. La seconde hydrolyse a lieu dans le réacteur comme à l'exemple 6 et la suite des opérations s'effectue comme à l'exemple 6.

Exemple 8

On procède comme à l'exemple 3 jusqu'à l'achèvement de la seconde hydrolyse. On ajoute alors à l'hydrolysat une quantité équivalente d'une solution de maltodextrine et d'amidon à 50% de matières sèches à laquelle on a préalablement ajouté des sels minéraux dissous dans de l'eau déminéralisée à 60°C dans une cuve thermostatée. On chauffe ensuite le mélange à 75°C au moyen d'un échangeur de chaleur à plaques, puis on y introduit des matières grasses composées d'oléine de palme, d'huile de noix de coco, d'huile de carthame, de lécithine et de vitamines liposolubles, les matières grasses ayant été préalablement fondues à 65°C et représentant 10% du mélange précédent. Après préchauffage à 80°C avec un temps d'attente de 5 min., on stérilise ensuite le liquide obtenu à 125°C pendant 2 min. par injection directe de vapeur, on le refroidit à 70°C par détente dans un vase d'expansion, on l'homogénéise en 2 étapes d'abord à 200 bar puis à 50 bar, on le refroidit à 10°C à l'aide d'un échangeur de chaleur à plaques, puis dans une cuve de stockage intermédiaire, on y ajoute une solution d'acide citrique à 10% dans de l'eau déminéralisée, des vitamines hydrosolubles, des oligoéléments et de la taurine. Enfin, on chauffe le mélange à 75°C, on l'homogénéise en un passage à 165-170 bar, et on le sèche par pulvérisation.

La poudre a la composition suivante:

| | | % |
|---|---|---|
| Peptides | | 12,5 |
| Matières grasses | | 26 |
| Hydrates de carbone | | 56,2 |
| dont | Lactose | 39,3 |
| | Maltodextrine | 10,8 |
| | Amidon | 6,1 |
| Minéraux | | 2,3 |
| Vitamines et oligo-éléments | | traces |
| Humidité | | 3 |

Exemple 9:

On procède comme à l'exemple 8 sauf qu'après la seconde homogénéisation on stérilise le liquide à 125°C pendant 2 min., on le refroidit à 10°C et on le remplit aseptiquement dans des récipients.

Le liquide a la composition suivante:

| | | % |
|---|---|---|
| Peptides | | 1,6 |
| Matières grasses | | 3,4 |
| Hydrates de carbone | | 7,4 |
| dont | Lactose | 5,2 |
| | Maltodextrine | 1,4 |
| | Amidon | 0,8 |
| Minéraux | | 0,3 |
| Vitamines et oligoéléments | | traces |
| Eau | | 79,9 |

**Revendications**

1. Procédé de préparation d'un hydrolysat de protéines de lait animal, dans lequel on hydrolyse enzymatiquement un produit lactosérique en deux étapes d'hydrolyse distinctes et on inactive l'enzyme thermiquement, caractérisé par le fait que les deux étapes d'hydrolyse sont réalisées avec une enzyme protéolytique choisie parmi la trypsine, la chymotrypsine, un mélange de trypsine et de chymotrypsine et la pancréatine et que l'on traite thermiquement l'hydrolysat de la première hydrolyse en solution aqueuse à 80-100°C pendant 3 à 10 min. à un pH de 6 à 8, de manière à dénaturer les protéines restées intactes après la première hydrolyse et à les rendre ainsi susceptibles à la seconde hydrolyse, de sorte qu'après la seconde hydrolyse, l'hydrolysat soit pratiquement exempt d'allergènes tels que protéines, fragments de protéine ou macropeptides de poids moléculaire supérieur à environ 10'000.

2. Procédé selon la revendication 1, dans lequel le produit lactosérique mis en oeuvre est choisi parmi le lactosérum, le lactosérum déminéralisé, les concentrés de lactosérum déminéralisé et leurs mélanges, le cas échéant avec le lactose.

3. Procédé selon la revendication 1, caractérisé par le fait que la seconde hydrolyse a lieu par charges dans un réacteur pendant 60 à 180 min.

4. Procédé selon la revendication 1, caractérisé par le fait que la seconde hydrolyse a lieu en continu dans un tube en régime turbulent pendant 1 à 60 min., de préférence pendant 2 à 20 min.

5. Procédé selon la revendication 1, caractérisé par le fait que l'on inactive l'enzyme en préchauffant l'hydrolysat à une température de 75 à 85°C et en le maintenant à cette température pendant environ 5 min., puis en le stérilisant.

6. Hydrolysat obtenu par la mise en oeuvre du procédé selon l'une des revendications 1 à 5.

7. Procédé de préparation d'un aliment hypoallergénique, caractérisé par le fait que l'on ajoute à l'hydrolysat obtenu selon la revendication 1, des hydrates de carbone, des sels minéraux et des matières grasses à l'état liquide contenant le cas échéant des vitamines liposolubles, on y ajoute le cas échéant une solution aqueuse contenant des vitamines hydrosolubles et des oligoéléments, puis on sèche.

8. Procédé selon la revendication 7, dans lequel l'hydrolysat mis en oeuvre contient l'enzyme non-inactivée, caractérisé par le fait que l'on inactive l'enzyme thermiquement lors de la préparation de

12

l'aliment.

**9.** Procédé selon la revendication 8, caractérisé par le fait que l'on inactive l'enzyme par préchauffage à 75-85°C pendant environ 5 min., puis par stérilisation à ultra haute température et on conditionne le produit à l'état liquide de manière aseptique au lieu de le sécher.

**10.** Aliment hypoallergénique obtenu par la mise en oeuvre du procédé selon l'une des revendications 7 à 9.

**11.** Utilisation d'un hydrolysat selon la revendication 6 dans les préparations alimentaires à usage diététique.

**Claims**

**1.** A process for the preparation of a hydrolyzate of animal milk proteins in which a whey product is enzymatically hydrolyzed in two separate hydrolysis steps and the enzyme is thermally inactivated, characterized in that the two hydrolysis steps are carried out with a proteolytic enzyme selected from trypsin, chymotrypsin, a mixture of trypsin and chymotrypsin and pancreatin and in that the hydrolyzate of the first hydrolysis step is heat-treated in aqueous solution for 3 to 10 minutes at 80 to 100°C and at a pH value of 6 to 8 to denature the proteins remaining intact after the first hydrolysis step and hence to make them susceptible to the second hydrolysis so that, after the second hydrolysis step, the hydrolyzate is substantially free from allergens, such as proteins, protein fragments or macropeptides having a molecular weight above about 10,000.

**2.** A process as claimed in claim 1, in which the whey product used is selected from whey, demineralized whey, demineralized whey concentrates and mixtures thereof, optionally with lactose.

**3.** A process as claimed in claim 1, characterized in that the second hydrolysis takes place in batches in a reactor over a period of 60 to 180 minutes.

**4.** A process as claimed in claim 1, characterized in that the second hydrolysis takes place continuously for 1 to 60 minutes and preferably for 2 to 20 minutes in a turbulent-state tube.

**5.** A process as claimed in claim 1, characterized in that the enzyme is inactivated by preheating the hydrolyzate to a temperature of 75 to 85°C and keeping it at that temperature for about 5 minutes, followed by sterilization.

**6.** The hydrolyzate obtained by the process claimed in any of claims 1 to 5.

**7.** A process for the preparation of a hypoallergenic food, characterized in that carbohydrates, mineral salts and liquid fats optionally containing fat-soluble vitamins are added to the hydrolyzate obtained by the process claimed in claim 1, an aqueous solution containing water-soluble vitamins and oligoelements is then optionally added and the whole is then dried.

**8.** A process as claimed in claim 7, in which the hydrolyzate used contains the non-inactivated enzyme, characterized in that the enzyme is thermally inacivated during the preparation of the food.

**9.** A process as claimed in claim 8, characterized in the enzyme is inactivated by preheating for about 5 mins. to 75-85°C and then by ultra-high-temperature sterilization and the product is packed in the liquid state under aseptic conditions instead of being dried.

**10.** A hypoallergenic food obtained by the process claimed in any of claims 7 to 9.

**11.** The use of the hydrolyzate claimed in claim 6 in the dietetic food preparations.

**Patentansprüche**

**1.** Verfahren zur Herstellung eines Eiweißhydrolysates aus tierischer Milch, worin ein Molkeprodukt in zwei

EP 0 322 589 B1

getrennten Hydrolyseschritten enzymatisch hydrolysiert wird und das Enzym thermisch inaktiviert wird, dadurch gekennzeichnet, daß die beiden Hydrolyseschritte mit einem unter Trypsin, Chymotrypsin, einem Gemisch aus Trypsin und Chymotrypsin, und Pankreatin ausgewählten proteolytischen Enzym erfolgen und daß das Hydrolysat der ersten Hydrolyse in wäßriger Lösung bei 80 bis 100°C während 3 bis 10 Minuten bei einem pH-Wert von 6 bis 8 thermisch behandelt wird, um die nach der ersten Hydrolyse intakt gebliebenen Eiweißstoffe zu denaturieren und sie so für die zweite Hydrolyse empfindlich zu machen, sodaß nach der zweiten Hydrolyse das Hydrolysat von Allergenen wie Eiweißstoffen, Eiweißstofffragmenten oder von Makropeptiden mit Mokulargewichten über ungefähr 10.000 befreit ist.

2. Verfahren nach Anspruch 1, worin das verwendete Molkeprodukt unter Molke, demineralisierter Molke, den Konzentraten von demineralisierter Molke und von deren Gemischen, gegebenenfalls mit Laktose, ausgewählt ist.

3. Verfahren nach Anspruch 1, dadurch gekennzeichnet, daß die zweite Hydrolyse diskontinuierlich in einem Reaktor während 60 bis 180 Minuten stattfindet.

4. Verfahren nach Anspruch 1, dadurch gekennzeichnet, daß die zweite Hydrolyse kontinuierlich in einem Rohr unter turbulenten Bedingungen während 1 bis 60 Minuten, vorzugsweise wahrend 2 bis 20 Minuten, stattfindet.

5. Verfahren nach Anspruch 1, dadurch gekennzeichnet, daß das Enzym durch vorhergehendes Erhitzen des Hydrolysates auf eine Temperatur von 75 bis 85°C und Halten des Hydrolysates bei dieser Temperatur während ungefähr 5 Minuten und anschließendes Sterilisieren inaktiviert wird.

6. Hydrolysat, erhalten durch Ausführen des Verfahrens nach einem der Ansprüche 1 bis 5.

7. Verfahren zur Herstellung eines hypoallergenen Nahrungsmittels, dadurch gekennzeichnet, daß zu dem nach Anspruch 1 erhaltenen Hydrolysat Kohlehydrate, Mineralsalze und Fettmaterialien im flüssigen Zustand, welche gegebenenfalls fettlösliche Vitamine beinhalten, zugefügt werden, dazu gegebenenfalls eine wäßrige Lösung,die wasserlösliche Vitamine und Spurenelemente enthält, zugegeben und anschließend getrocknet wird.

8. Verfahren nach Anspruch 7, worin das verwendete Hydrolysat ein Enzym enthält, welches nicht inaktiviert ist, dadurch gekennzeichnet, daß das Enzym bei der Herstellung des Nahrungsmittels thermisch inaktiviert wird.

9. Verfahren nach Anspruch 8, daurch gekennzeichnet, daß das Enzym durch vorhergehendes Erhitzen auf 75 bis 85°C während ungefähr 5 Minuten, anschließend durch Sterilisation bei sehr hoher Temperatur inaktiviert wird und daß das Produkt im flüssigen Zustand keimfrei konditioniert wird, anstelle es zu trocknen.

10. Hypoallergenes Nahrungsmittel, erhalten durch Ausführen des Verfahrens nach einem der Ansprüche 7 bis 9.

11. Verwendung eines Hydrolysates nach Anspruch 6 zur Herstellung von für Diätzwecke vorgesehenen Nahrungsmittelzubereitungen.

14